# EUROPÄISCHE PATENTSCHRIFT

(11) **EP 0 805 951 B1**
(45) Veröffentlichungstag und Bekanntmachung des Hinweises auf die Patenterteilung: **19.01.2000**
(21) Anmeldenummer: 95934592.7
(22) Anmeldetag: 05.10.1995
(51) Int. Cl.: G01C 21/20, G08G 1/0968

(54) **ZIELEINGABE FÜR NAVIGATIONSSYSTEM**
TARGET INPUT FOR A NAVIGATION SYSTEM
UNITE D'ENTREE DE DESTINATION POUR SYSTEME DE NAVIGATION

(30) Priorität: 07.10.1994 DE 4436992; 14.09.1995 DE 19535576
(43) Veröffentlichungstag der Anmeldung: 12.11.1997
(73) Patentinhaber: MANNESMANN Aktiengesellschaft, 40213 Düsseldorf (DE)
(72) Erfinder: WAIZMANN, Gerd, D-83083 Riedering (DE); GARTHWAITE, Paul, D-85598 Baldham (DE); ALBRECHT, Uwe, D-80807 München (DE)
(74) Vertreter: Presting, Hans-Joachim, Dipl.-Ing.
(86) Internationale Anmeldenummer: DE9501414
(87) Internationale Veröffentlichungsnummer: WO9611380

(56) Entgegenhaltungen:
- EP-A- 0 569 246
- EP-A- 0 697 686
- DE-A- 4 039 887
- US-A- 5 237 323

## Beschreibung

### Beschriebung für folgende Vertragsstaaten : DE, ES, FR, GB, IT, SE

Die Erfindung betrifft ein Verfahren und eine Vorrichtung zur Zielführungsunterstützung eines Fahrzeugführers zur Erreichung einer Zielposition mit einem Fahrzeug, bei dem die aktuelle Ortsposition des Fahrzeugs ermittelt, eine Fahrtroute bestimmt und für diese Fahrtroute aktuelle Fahrhinweise von einem außerhalb des Fahrzeugs angeordneten Verkehrsrechner eingeholt und dem Fahrer angezeigt werden.

Fahrzeugleit- und Zielführungssysteme, insbesondere Off-Board-Navigationssysteme, mit optischen und/oder akustischen Ausgabeeinrichtungen für entsprechende Fahrhinweise zur Zielführung eines Fahrzeugführers entlang einer ermittelten Fahrtroute zu einem vorgegebenen Ziel sind bekannt; sie dienen dazu, beispielsweise dem ortsunkundigen Fahrzeugführer anhand von im Fahrzeug oder extern abgelegten digitalisierten Straßenkarten z.B. die aktuelle geografische Position, die Fahrtroute sowie alle bevorstehenden Richtungsänderungen anzuzeigen.

Bei dem aus der DE 4039887 A1 bekannten Verfahren wird zunächst die gewünschte Zielposition von Hand eingegeben und die aktuelle geographische Position durch ein im Fahrzeug installiertes Ortungssystem bestimmt. Die Zielposition und die aktuelle geographische Position werden anschließend an ein Off-Board-Navigationssystem übertragen, das dann eine Fahrtroute anhand einer digitalen Straßenkarte unter Berücksichtigung aktueller Verkehrsinformationen ermittelt. Die Fahrtroute wird schließlich zusammen mit dem Straßennetz im Nahbereich des Fahrzeugs vom Off-Board-Navigationssystem an das Fahrzeug übermittelt und farblich hervorgehoben beispielsweise durch einfache Pfeil- oder Wegsymbole auf einem Display ausgegeben.

Nachteilig ist dabei und bei anderen bekannten Zielführungssystemen, daß immer eine Eingabe des Ziels in irgendeiner Form durch den Fahrzeugführer erforderlich ist Diese Notwendigkeit ist jedoch besonders bei Routinefahrten (z.B.: der tägliche Weg zur Arbeitsstätte und zurück) für viele Fahrer lästig. Da die Fahrtroute in diesen Fällen natürlich bestens bekannt ist, unterbleibt vielfach die Zieleingabe und somit die Zielführung, obwohl Zielführungssysteme, welche die aktuelle Verkehrssituation in ihre Zielführung einbeziehen, auch auf der Fahrt zu täglich gleichen Zielen wertvolle Hilfe leisten können, indem sie das Fahrzeug auf dem schnellsten mehrerer möglicher Wege zum Ziel führen, insbesondere wenn sich auf der Fahrtroute Staus bilden und dergleichen.

EP-A-0 697 686 ist ein Stand der Technik gemäss Artikel 54 (3) EPÜ für die Vertragsstaaten Deutschland, Spanien, Frankreich, Grossbritannien, Italien und Schweden. Das Dokument beschreibt ein Verfahren zur Zielfünrungsunterstützung eines Fahrzeugführers zur Erreichung einer Zielposition, bei dem die aktuelle Ortsposition ermitteit, eine Fahrtroute bestimmt und die Zielposition selbsttätig nach Wahrscheinlichkeitsgesichtspunkten anhand eines Vergieichs gespeicherter Fahrinformationen aus der vergangenheit mit aktuellen Fahrinformationen abgeleitet wird. Digital codierte Verkehrsnachrichten (RDS-TMC) werden empfangen und bei der Fahrtroutenbestimmung berücksichtigt.

Es ist **Aufgabe** der vorliegenden Erfindung, ein Verfahren zur vollautomatischen Zielführungsunterstützung insbesondere bei sich oft wiederholenden Routinefahrten anzugeben, bei dem der Eingabeaufwand durch den Fahrer minimiert ist. Die Zielführungsunterstützung soll insbesondere beim Auftreten von Staus, kurzfristigen Umleitungen usw. aktiv werden. Außerdem soll eine Vorrichtung zur Durchführung des Verfahrens angegeben werden.

Die **Lösung** dieser Aufgabe hinsichtlich des Verfahrens ist erfindungsgemäß gekennzeichnet durch die im Patentanspruch 1 angegebenen Merkmale. Durch die kennzeichnenden Merkmale der abhängigen Ansprüche 2 bis 11 ist dieses Verfahren in vorteilhafter Weise weiter ausgestaltbar. Eine Zielführungsunterstützungsvorrichtung zur Durchführung des erfindungsgemäßen Verfahrens weist die Merkmale des Patentanspruchs 12 auf und ist durch die Merkmale der abhängigen Ansprüche 13 bis 22 in vorteilhafter Weise ausgestaltbar.

Die Erfindung sieht vor, daß die Zielposition selbsttätig nach Wahrscheinlichkeitsgesichtspunkten anhand eines Vergleichs gespeicherter Fahrinformationen aus der Vergangenheit mit aktuellen Fahrinformationen abgeleitet wird.

Eine Zielführungsunterstützung, die auf diese Weise die Zielposition des Fahrers erkennt, kann den Fahrer bei einer großen Anzahl von Fahrten unterstützen, ohne daß dieser sein Fahrziel in das System eingeben muß. Die Erfindung geht von der Erkenntnis aus, daß es gerade bei sich häufig wiederholenden Fahrten einerseits für den Fahrer meist lästig ist, die ohnehin bekannte Zielposition einzugeben, um auf Störungen entlang der gewohnten Fahrtroute aufmerksam gemacht zu werden. Andererseits bietet gerade die Tatsache, daß es sich bei Routinefahrten um ein und denselben Fahrtstreckenverlauf handelt, die Möglichkeit, die Zielposition und damit die Fahrtroute aus dem anfänglichen Verlauf und/oder aus den aktuellen Zeitinformationen anhand gespeicherter Fahrinformationen aus der Vergangenheit abzuleiten. Die Zielführungsunterstützung sieht dabei vorteilhafterweise so aus, daß Fahrhinweise nur dann angezeigt werden, wenn Behinderungen oder Störungen im Verkehrsfluß, z.B. Staus, vorliegen. Liegen keine Behinderungen vor, kann auch dies dem Fahrer angezeigt werden.

Mit der Erfindung wird vorgeschlagen, daß die aktuellen Ortspositionen des Fahrzeugs fortlaufend ermittelt und in einem Arbeitsspeicher abgelegt werden und daß die Zielposition anhand der in der ersten Phase der Fahrt gespeicherten aktuellen Ortspositionen abgeleitet wird. Vom anfänglichen Verlauf der aktuellen Fahrtroute wird also die Zielposition und anschließend die Fahrtroute abgeleitet, d.h. die Fahrtroute vorausgesagt, die das Fahrzeug am Ende der Fahrt befahren haben wird.

Eine alternative Ausgestaltung der Erfindung sieht vor, daß die Zielposition und damit die Fahrtroute anhand von Zeitinformationen, die den Zeitpunkt des Beginns der Fahrt umfassen, abgeleitet wird. Dies ist besonders bei Fahrten, die mit großer Regelmäßigkeit zum selben Zeitpunkt beginnen, wie das z.B. bei der täglichen Fahrt zur Arbeit der Fall ist, von Vorteil, da hierbei mit großer Wahrscheinlichkeit vom Zeitpunkt des Beginns der Fahrt auf das Fahrziel geschlossen werden kann, wenn die entsprechenden Zeitinformationen in der Vergangenheit zusammen mit der Fahrtroute ermittelt und festgehalten worden sind. Eine besonders hohe Prognosesicherheit läßt sich erreichen, wenn die Zielpositionsableitung unter Nutzung sowohl örtlicher als auch zeitlicher Fahrinformationen erfolgt.

Um die Zielposition anhand des anfänglichen Verlaufs der aktuellen Fahrtroute, also der gespeicherten aktuellen Ortspositionen zu ermitteln, sieht eine Ausgestaltung der Erfindung vor, daß die gespeicherten aktuellen Ortspositionen mit in einem Standardfahrtroutenspeicher, in dem in der Vergangenheit befahrene Standardfahrtrouten abgelegt sind, verglichen werden. Wenn die gespeicherten aktuellen Ortspositionen mit einem insbesondere anfänglichen Streckenabschnitt einer der Fahrtrouten des Standardfahrtroutenspeichers übereinstimmt, wird die entsprechende Zielposition und Standardfahrtroute als aktuelle Fahrtroute abgeleitet (identifiziert). Um fehlerhafter Fahrhinweisanzeigen, die vom Fahrer wiederum als lästig empfunden werden könnten, möglichst gering zu halten, wird weiterhin vorgeschlagen, daß eine Übereinstimmung mit einer der Fahrtrouten oder Streckenabschnitte im Standardfahrtroutenspeicher nur dann als gegeben angenommen wird, wenn die Übereinstimmung mit einer vorgegebenen statistischen Sicherheit vorliegt. Für diese kann z.B. ein Wert von 95 % vorgegeben sein. Alternativ dazu ist es aber auch möglich, die ermittelte Zielposition vom Fahrer bestätigen zu lassen, insbesondere dann, wenn gebührenpflichtige Dienstleistungen in Anspruch genommen werden sollen.

Zur Aktualisierung des Bestandes an gespeicherten Standardfahrtrouten ist es vorgesehen, daß die gespeicherten aktuellen Ortspositionen jeweils nach Beendigung der Fahrt selbsttätig in einem Fahrtroutenzwischenspeicher für eine vorgegebene Zeitspanne abgelegt werden. Eine Fahrtroute wird aus dem Fahrtroutenzwischenspeicher in den Standardfahrtroutenspeicher übertragen, wenn die Häufigkeit, mit der die entsprechende Fahrtroute im Fahrtroutenzwischenspeicher vorhanden ist, größer als ein vorgegebener Wert ist. Um den Fahrtroutenzwischenspeicher nicht unnötig zu füllen, werden die im Fahrtroutenzwischenspeicher abgelegten Fahrtrouten nach Ablauf einer vorgegebenen Zeitspanne oder nach Übertragung in den Standardfahrtroutenspeicher gelöscht.

Außerdem wird vorgeschlagen, daß die Standardfahrtrouten zusammen mit Zeitinformationen, die vorzugsweise den Wochentag und die Tageszeit umfassen, abgespeichert werden. Dadurch können die Standardfahrtrouten insbesondere auch zur Ermittlung der Zielposition und damit der Fahrtroute anhand von Zeitinformationen verwendet werden.

Zweckmäßigerweise wird die Zielposition mittels auf einem Bordcomputer ablaufender Rechenprogramme abgeleitet.

Eine bevorzugte Zielführungsunterstützungsvorrichtung sieht eine Ortspositionsermittlungseinrichtung vor, mit der die aktuelle Ortsposition ermittelbar ist. Desweiteren weist die Zielführungsunterstützungsvorrichtung eine Fahrtroutenermittlungseinrichtung auf, die mit einer Zielpositionsableiteinrichtung zum Ableiten der Zielposition nach Wahrscheinlichkeitsgesichtspunkten anhand gespeicherter Fahrinformationen aus der Vergangenheit ausgestattet ist. Die Fahrtroutenermittlungseinrichtung ist mit einer ebenfalls vorgesehenen Kommunikationseinrichtung zum Einholen aktueller Fahrhinweise von einem außerhalb des Fahrzeugs angeordneten Verkehrsrechner verbunden. Angezeigt werden die Fahrhinweise dem Fahrzeugführer durch eine im Fahrzeug installierte Anzeigeeinrichtung. Durch diese Zielführungsunterstützungsvorrichtung wird sichergestellt, daß der Fahrzeugführer auch bei Routinefahrten, bei denen in der Regel keine Eingabe der Zielposition durch den Fahrzeugführer erfolgt, bei Auftreten von Staus usw. Fahrhinweise für diese Fahrtroute erhält.

Mit der Erfindung wird vorgeschlagen, daß die aktuelle Ortsposition durch die Ortspositionserermittlungseinnchtung fortlaufend ermittelbar ist und daß ein Arbeitsspeicher zur Speicherung der fortlaufend ermittelten aktuellen Ortspositionen vorgesehen ist. Die Zielposition ist durch die über gespeicherte Entscheidungskriterien verfügende Zielpositionsableiteinrichtung aus den bis dahin gespeicherten aktuellen Ortspositionen, also aus dem anfänglichen Verlauf der aktuellen Fahrtroute, ableitbar.

Eine alternative Ausgestaltung der Erfindung sieht vor, daß die Fahrinformationen Zeitinformationen umfassen, die mindestens den Zeitpunkt des Beginns der Fahrt beinhalten, und die Zielposition durch die Zielpositionsableiteinrichtung aus den Zeitinformationen ableitbar ist.

Um die in der Vergangenheit häufig zurückgelegten Fahrtrouten berücksichtigen zu können, weist die Zielpositionsableiteinrichtung einen Standardfahrtroutenspeicher, in dem Standardfahrtrouten in Form von aufeinanderfolgenden Ortspositionen abgelegt sind, und eine Vergleichseinrichtung zum Vergleich der gespeicherten aktuellen Ortspositionen mit im Standardfahrtroutenspeicher abgelegten Standardfahrtrouten zur Ableitung der Zielposition auf.

Zur Aktualisierung des Bestands der Standardfahrtrouten ist ein Fahrtroutenzwischenspeicher vorgesehen, in dem die gespeicherten aktuellen Ortspositionen jeweils nach Beendigung der Fahrt selbsttätig ablegbar sind. Eine zusätzlich vorgesehene Übertragungseinrichtung ermöglicht die Übertragung der Fahrtrouten aus dem Fahrtroutenzwischenspeicher in den Standardfahrtroutenspeicher, wenn die Häufigkeit, mit der die entsprechende Fahrtroute befahren wurde, größer als ein vorgegebener Wert ist. Die Häufigkeit bezieht sich auf eine vorgegebene Zeitspanne vorzugsweise in der unmittelbaren Vergangenheit.

Vorzugsweise ist zur Durchführung der relativ aufwendigen Erfassungs- und Vergleichsoperationen im Fahrzeug ein Bordcomputer vorgesehen, wobei die Zielpositionsableiteinrichtung ein im Arbeitsspeicher des Bordcomputers gespeichertes Rechenprogramm ist, das mindestens einen statistischen Rechenalgorithmus aufweist.

Die Kommunikationseinnchtung für den Datenaustausch mit dem externen Verkehrsrechner ist vorzugsweise als ein Mobilfunktelefon ausgestaltet.

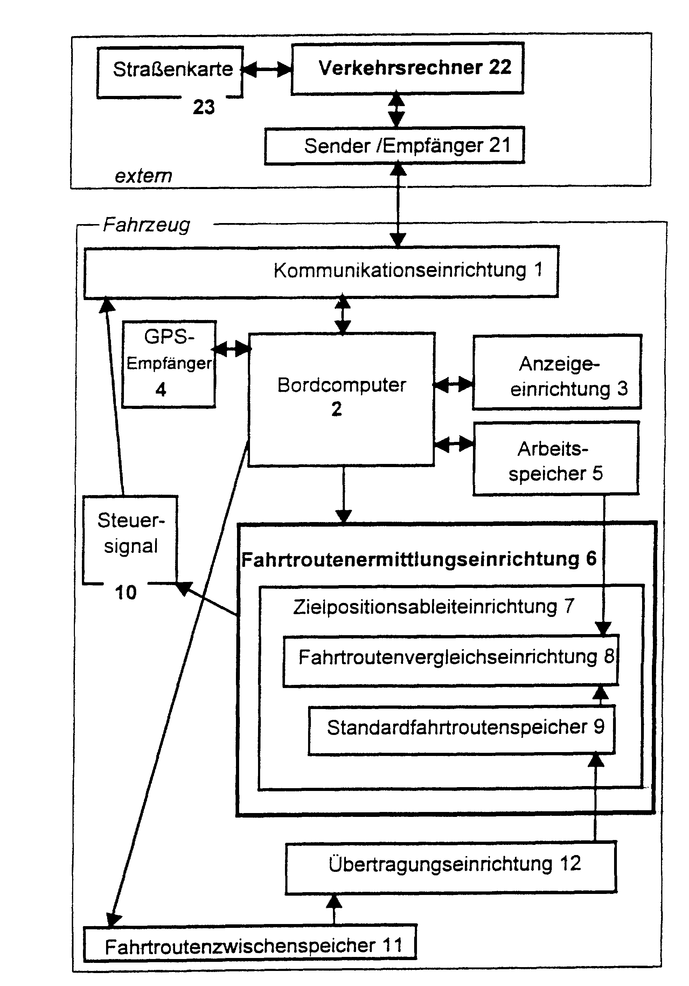

Anhand des in der einzigen Figur der Zeichnung dargestellten Systems zur Zielführung eines Fahrzeugs mit einer Zielführungsunterstützungsvorrichtung im Fahrzeug und einem externen Verkehrsrechner wird die Erfindung nachfolgend beispielhaft beschrieben.

Das in der Figur schematisch dargestellte System zur Zielführung eines Fahrzeugs umfaßt eine externe und eine im Fahrzeug angeordnete Systemeinheit. Die Systemeinheit im Fahrzeug ist mit einer Kommunikationseinrichtung 1 ausgerüstet, mittels welcher die datentechnische Verbindung zur externen Systemeinheit herstellbar ist. Verbunden ist die Kommunikationseinrichtung 1 mit dem im Fahrzeug vorgesehenen Bordcomputer 2, durch den die Steuerung der fahrzeuginternen Geräteeinheiten erfolgt. So ist der Bordcomputer 2 mit einer Anzeigeeinrichtung 3 verbunden, die die Ausgabe von Fahrhinweisen für den Fahrzeugführer ermöglicht. Dabei kann die Ausgabe optisch und zusätzlich akustisch, insbesondere in Form einer Sprachausgabe, erfolgen. Ein im Fahrzeug installierter GPS-Empfänger 4 zum Empfang von Signalen für die Satellitennavigation (GPS = Global Positioning System) ist zur fortlaufenden Bestimmung der aktuellen Ortsposition des Fahrzeugs vorgesehen. Verbunden ist der GPS-Empfänger 4 über den Bordcomputer 2 mit einem Arbeitsspeicher 5, in dem die ermittelten Ortspositionsdaten zusammen mit entsprechenden Zeitinformationen, insbesondere dem Zeitpunkt des Beginns der Fahrt, ablegbar sind. Zum Ableiten der aktuellen Zielposition und Fahrtroute aus den im Speicher 5 als gespeicherte aktuelle Ortspositionen abgelegten Ortspositionsdaten ist eine ebenfalls mit dem Bordcomputer 2 verbundene Fahrtroutenermittlungseinrichtung 6 vorgesehen, zu der wiederum eine Zielpositionsableiteinrichtung 7 gehört. Die Zielpositionsableiteinrichtung 7 umfaßt im Ausführungsbeispiel eine Fahrtroutenvergleichseinrichtung 8, die Zugriff auf die gespeicherten aktuellen Ortspositionen im Arbeitsspeicher 5 und die in einem Standardfahrtroutenspeicher 9 abgelegten typischen Fahrtrouten hat. Selbstverständlich kann der Standardfahrtroutenspeicher 9 auch außerhalb des Fahrzeugs angeordnet sein, insbesondere wenn die Standardfahrtrouten zu einer organisatorischen Einheit, z.B. einem Busunternehmen, gehören. Die Fahrtroutenvergleichseinrichtung 8 ermöglicht den Vergleich der aktuellen Fahrtroute mit den im Standardfahrtroutenspeicher 9 abgelegten Fahrtrouten und daraus abgeleitet die Vorhersage des tatsächlichen aktuellen Fahrtziels (Zielposition) des Fahrzeugs. Die Fahrtroutenermittlungseinrichtung 6 ist mit der Kommunikationseinrichtung 1 derart verbunden, daß über ein Steuersignal 10 das Einholen aktueller Fahrhinweise für die Fahrtroute zur aktuellen Zielposition durch die Kommunikationseinrichtung 1 auslösbar ist.

Die gespeicherten aktuellen Ortspositionen sind nach Beendigung der Fahrt in einem mit dem Bordcomputer 2 verbundenen Fahrtroutenzwischenspeicher 11 ablegbar. Der Fahrtroutenzwischenspeicher 11 ist über eine Übertragungseinrichtung 12 mit dem Standardfahrtroutenspeicher 9 verbunden. Die Übertragungseinrichtung 12 ermöglicht die Übertragung von Fahrtrouten aus dem Fahrtroutenzwischenspeicher 11 in den Standardfahrtroutenspeicher 9, wenn die Häufigkeit, mit der eine Fahrtroute in einer vorgegebenen Zeitspanne in der Vergangenheit befahren wurde, größer als ein vorgegebener oder durch den Fahrer vorgebbarer Wert ist. Die Übertragungseinrichtung 12 ermöglicht also einen Vergleich aller im Fahrtroutenzwischenspeicher 11 abgelegten Fahrtrouten untereinander und somit die Bestimmung der Häufigkeit, mit der eine Fahrtroute im Fahrtroutenzwischenspeicher 11 vorkommt. Die im Fahrtroutenzwischenspeicher 11 abgelegten Fahrtrouten sind vorzugsweise mit einer Zeitinformation versehen, die insbesondere Uhrzeit und Wochentag und den Monat des Beginns der entsprechenden Fahrtroute umfaßt. Durch einen entsprechenden Aktualisierungsalgorithmus ist der Fahrtroutenzwischenspeicher 11 aktualisierbar; dabei bewirkt der Aktualisierungsalgorithmus die Löschung aller im Fahrtroutenzwischenspeicher 11 abgelegten Fahrtrouten, deren Zeitpunkt außerhalb einer vorgegebenen Zeitspanne liegt.

Bei der Zielführungsunterstützung des Fahrzeugführers werden nach dem Start des Fahrzeugs die aktuellen Ortspositionen mit Hilfe des GPS-Empfängers 4 und des Bordcomputers 2 fortlaufend ermittelt und im Speicher 5 als gespeicherte aktuelle Ortspositionen abgelegt. Aus der bis zu diesem Zeitpunkt vorliegenden aktuellen Fahrtroute wird durch die Fahrtroutenermittlungseinrichtung 6 die Zielposition und somit die vom Fahrer voraussichtlich gewünschte Fahrtroute abgeleitet. Dazu wird die Zielpositionsableiteinrichtung 7 veranlaßt, in kurzen zeitlichen Abständen mittels der Fahrtroutenvergleichseinrichtung 8 die gespeicherten aktuellen Ortspositionen mit den Fahrtrouten im Standardfahrtroutenspeicher 9 zu vergleichen. Eine der im Standardfahrtroutenspeicher 9 abgelegten Standardfahrtrouten wird als aktuelle Fahrtroute identifiziert, wenn diese mindestens einem Streckenabschnitt der im Standardfahrtroutenspeicher 9 abgelegten Fahrtrouten mit einer vorgegebenen statistischen Sicherheit entspricht. Um Fehlidentifizierungen zu vermeiden, ist für die vorgegebene statistische Sicherheit ein Wert von mindestens 95 % vorgesehen; alternativ dazu kann aber auch z.B. durch Knopfdruck oder dergleichen dem System mitgeteilt werden, daß es sich aktuell um eine Standardfahrtroute handelt, und auf diese Weise die Zahl der Fehlidentifizierungen weiter verringert werden. Ist eine aktuelle Fahrtroute mit der vorgegebenen statistischen Sicherheit ermittelt, wird von der Fahrtroutenermittlungseinrichtung 6 ein Steuersignal 10 ausgelöst und die Kommunikationseinrichtung 1 veranlaßt, für diese aktuelle Fahrtroute Verkehrsinformationen vom Verkehrsrechner einzuholen. Der Verkehrsrechner 22 überträgt nach einer entsprechenden Anforderung aktuelle Fahrhinweise und/oder eine aktuelle alternative Fahrtroute an das Fahrzeug.

Die Ermittlung der Standardfahrtrouten erfolgt dadurch, daß nach Beendigung der Fahrt die gespeicherten aktuellen Ortspositionen jeweils im Fahrtroutenzwischenspeicher 11 abgelegt werden. Die im Fahrtrouterzwischenspeicher 11 abgelegten Fahrtrouten werden durch die Übertragungseinrichtung 12 in den Standardfahrtroutenspeicher 9 übertragen, wenn eine Fahrtroute im Fahrtrouterwwischenspeicher 11 häufiger als eine vorgegebene Zahl vorhanden ist. Die im Fahrtroutenzwischenspeicher 11 vorliegenden Fahrtrouten werden nach der Übertragung in den Standardfahrtroutenspeicher 9 gelöscht. Eine Löschung erfolgt ebenfalls, wenn die Zeitinformation einer im Fahrtroutenzwischenspeicher 11 abgelegten Fahrtroute außerhalb einer vorgegebenen Zeitspanne liegt. Eine Löschung der Fahrtrouten erfolgt auch für die Fahrtrouten im Standardfahrtroutenspeicher 9, wenn deren Zeitinformation (für das letzte Befahren) außerhalb einer ebenfalls vorgegebenen Zeitspanne liegt, wobei diese Zeitspanne in der Regel größer als die Zeitspanne zur Löschung von Fahrtrouten im Fahrroutenzwischenspeicher 11 ist.

Selbstverständlich ist auch eine halbautomatische Ermittlung der Standardfahrtrouten denkbar. In diesem Fall teilt der Fahrzeugführer dem Bordcomputer z.B. durch Knopfdruck mit, daß die gespeicherten aktuellen Ortspositionen eine neue typische Fahrtroute betreffen; der Bordrechner speichen dann die Fahrtroute am Ende der Fahrt direkt im Standardfahrtroutenspeicher 9 ab. Ein Fahrtroutenzwischenspeicher 11 ist bei dieser Ausgestaltung der Erfindung nicht erforderlich.

Alternativ zu der oben beschnebenen Ausführungsform kann die Zielpositionsableiteinrichtung 7 als ein statistischer Rechenalgorithmus ausgebildet sein, durch den unter Berücksichtigung zufälliger Abweichungen aus den Daten der aktuellen Ortspositionsdaten die aktuelle Fahrtroute rechentechnisch ableitbar ist.

Es ist selbstverständlich möglich, die gerätetechnischen Ausgestaltungen der Zielpositionsableiteinrichtung 7, der Fahrtroutenvergleichseinrichtung 8, des Standardfahrtroutenspeichers 9, des Fahrtroutenzwischenspeichers 11 und der Übertragungseinrichtung 12 mindestens teilweise durch entsprechende Rechenalgorithmen, die zweckmäßigerweise vom Bordcomputer 2 abgearbeitet werden, zu ersetzen. Auch das Steuersignal 10 kann zweckmäßigerweise durch ein entsprechendes Rechenprogramm im Zusammenwirken mit einer entsprechenden gerätetechnischen Einheit erzeugt werden.

Die hier im wesentlichen anhand der gespeicherten aktuellen Ortspositionen beschriebene Bestimmung der Zielposition und der Fahrtroute kann natürlich immer unter Berücksichtigung oder unter ausschließlicher Heranziehung der aktuellen Zeitinformationen erfolgen. Insbesondere bei Routinefahrten, die immer zum gleichen Zeitpunkt stattfinden, kann anhand der Zeitinformationen mit hoher Sicherheit auf die aktuelle Zielposition und Fahrtroute geschlossen werden.

### BEZUGSZEICHENLISTE:

- 1: Kommunikationseinnchtung
- 2: Bordcomputer
- 3: Anzeigeeinrichtung
- 4: GPS-Empfänger
- 5: Arbeitsspeicher
- 6: Fahrtroutenermittlungseinnchtung
- 7: Zielpositionsableiteinrichtung
- 8: Fahrtroutenvergleichseinrichtung
- 9: Standardfahrtroutenspeicher
- 10: Steuersignal
- 11: Fahrtroutenzwischenspeicher
- 12: Übertragungseinrichtung

- 21: Sender/Empfänger
- 22: Verkehrsrechner
- 23: digitale Straßenkarte

### Beschriebung für folgende Vertragsstaaten : AT, BE, CH, LI, NL, PT

Die Erfindung betrifft ein Verfahren und eine Vorrichtung zur Zielführungsunterstützung eines Fahrzeugführers zur Erreichung einer Zielposition mit einem Fahrzeug, gemäß den Oberbegriffen der Ansprüche 1 und 12.

Fahrzeugleit- und Zielführungssysteme, insbesondere Off-Board-Navigationssysteme, mit optischen und/oder akustischen Ausgabeeinrichtungen für entsprechende Fahrhinweise zur Zielführung eines Fahrzeugführers entlang einer ermittelten Fahrtroute zu einem vorgegebenen Ziel sind bekannt; sie dienen dazu, beispielsweise dem ortsunkundigen Fahrzeugführer anhand von im Fahrzeug oder extern abgelegten digitalisierten Straßenkarten z.B. die aktuelle geografische Position, die Fahrtroute sowie alle bevorstehenden Richtungsänderungen anzuzeigen.

Bei dem aus der DE 4039887 A1 bekannten Verfahren wird zunächst die gewünschte Zielposition von Hand eingegeben und die aktuelle geographische Position durch ein im Fahrzeug installiertes Ortungssystem bestimmt. Die Zielposition und die aktuelle geographische Position werden anschließend an ein Off-Board-Navigationssystem übertragen, das dann eine Fahrtroute anhand einer digitalen Straßenkarte unter Berücksichtigung aktueller Verkehrsinformationen ermittelt. Die Fahrtroute wird schließlich zusammen mit dem Straßennetz im Nahbereich des Fahrzeugs vom Off-Board-Navigationssystem an das Fahrzeug übermittelt und farblich hervorgehoben beispielsweise durch einfache Pfeil- oder Wegsymbole auf einem Display ausgegeben.

Nachteilig ist dabei und bei anderen bekannten Zielführungssystemen, daß immer eine Eingabe des Ziels in irgendeiner Form durch den Fahrzeugführer erforderlich ist. Diese Notwendigkeit ist jedoch besonders bei Routinefahrten (z.B.: der tägliche Weg zur Arbeitsstätte und zurück) für viele Fahrer lästig. Da die Fahrtroute in diesen Fällen natürlich bestens bekannt ist, unterbleibt vielfach die Zieleingabe und somit die Zielführung, obwohl Zielführungssysteme, welche die aktuelle Verkehrssituation in ihre Zielführung einbeziehen, auch auf der Fahrt zu täglich gleichen Zielen wertvolle Hilfe leisten können, indem sie das Fahrzeug auf dem schnellsten mehrerer möglicher Wege zum Ziel führen, insbesondere wenn sich auf der Fahrtroute Staus bilden und dergleichen.

EP-A-0 697 686 ist ein Stand der Technik gemäss Artikel 54 (3) EPÜ für die vertragsstaaten Deutschland, Spanien, Frankreich, Grossbritannien, Italien und Schweden. Das Dokument beschreibt ein Verfahren zur Zielführungsunterstützung eines Fahrzeugführers zur Erreichung einer Zielposition, bei dem die aktuelle Ortsposition ermittelt, eine Fahrtroute bestimmt und die Zielposition selbsttätig nach Wahrscheinlichkeitsgesichtspunkten anhand eines Vergleichs gespeicherter Fahrinformationen aus der Vergangenheit mit aktuelien Fahrinformationen abgeleitet wird. Digitai codierte Verkehrsnachrichten (RDS-TMC) werden empfangen und bei der Fahrtroutenbestimmung berücksichtigt.

Es ist **Aufgabe** der vorliegenden Erfindung, ein Verfahren zur vollautomatischen Zielführungsunterstützung insbesondere bei sich oft wiederholenden Routinefahrten anzugeben, bei dem der Eingabeaufwand durch den Fahrer minimiert ist. Die Zielführungsunterstützung soll insbesondere beim Auftreten von Staus, kurzfristigen Umleitungen usw. aktiv werden. Außerdem soll eine Vorrichtung zur Durchführung des Verfahrens angegeben werden.

Die **Lösung** dieser Aufgabe hinsichtlich des Verfahrens ist erfindungsgemäß gekennzeichnet durch die im Patentanspruch 1 angegebenen Merkmale. Durch die kennzeichnenden Merkmale der abhängigen Ansprüche 2 bis 11 ist dieses Verfahren in vorteilhafter Weise weiter ausgestaltbar. Eine Zielführungsuntersttzungsvorrichtung zur Durchführung des erfindungsgemäßen Verfahrens weist die Merkmale des Patentanspruchs 12 auf und ist durch die Merkmale der abhängigen Ansprüche 13 bis 22 in vorteilhafter Weise ausgestaltbar.

Die Erfindung sieht vor, daß die Zielposition selbsttätig nach Wahrscheinlichkeitsgesichtspunkten anhand eines Vergleichs gespeicherter Fahrinformationen aus der Vergangenheit mit aktuellen Fahrinformationen abgeleitet wird.

Eine Zielführungsunterstützung, die auf diese Weise die Zielposition des Fahrers erkennt, kann den Fahrer bei einer großen Anzahl von Fahrten unterstützen, ohne daß dieser sein Fahrziel in das System eingeben muß. Die Erfindung geht von der Erkenntnis aus, daß es gerade bei sich häufig wiederholenden Fahrten einerseits für den Fahrer meist lästig ist, die ohnehin bekannte Zielposition einzugeben, um auf Störungen entlang der gewohnten Fahrtroute aufmerksam gemacht zu werden. Andererseits bietet gerade die Tatsache, daß es sich bei Routinefahrten um ein und denselben Fahrtstreckenverlauf handelt, die Möglichkeit, die Zielposition und damit die Fahrtroute aus dem anfänglichen Verlauf und/oder aus den aktuellen Zeitinformationen anhand gespeicherter Fahrinformationen aus der Vergangenheit abzuleiten. Die Zielführungsunterstützung sieht dabei vorteilhafterweise so aus, daß Fahrhinweise nur dann angezeigt werden, wenn Behinderungen oder Störungen im Verkehrsfluß, z.B. Staus, vorliegen. Liegen keine Behinderungen vor, kann auch dies dem Fahrer angezeigt werden.

Mit der Erfindung wird vorgeschlagen, daß die aktuellen Ortspositionen des Fahrzeugs fortlaufend ermittelt und in einem Arbeitsspeicher abgelegt werden und daß die Zielposition anhand der in der ersten Phase der Fahrt gespeicherten aktuellen Ortspositionen abgeleitet wird. Vom anfänglichen Verlauf der aktuellen Fahrtroute wird also die Zielposition und anschließend die Fahrtroute abgeleitet, d.h. die Fahrtroute vorausgesagt, die das Fahrzeug am Ende der Fahrt befahren haben wird.

Eine alternative Ausgestaltung der Erfindung sieht vor, daß die Zielposition und damit die Fahrtroute anhand von Zeitinformationen, die den Zeitpunkt des Beginns der Fahrt umfassen, abgeleitet wird. Dies ist besonders bei Fahrten, die mit großer Regelmäßigkeit zum selben Zeitpunkt beginnen, wie das z.B. bei der täglichen Fahrt zur Arbeit der Fall ist, von Vorteil, da hierbei mit großer Wahrscheinlichkeit vom Zeitpunkt des Beginns der Fahrt auf das Fahrziel geschlossen werden kann, wenn die entsprechenden Zeitinformationen in der Vergangenheit zusammen mit der Fahrtroute ermittelt und festgehalten worden sind. Eine besonders hohe Prognosesicherheit läßt sich erreichen, wenn die Zielpositionsableitung unter Nutzung sowohl örtlicher als auch zeitlicher Fahrinformationen erfolgt.

Um die Zielposition anhand des anfänglichen Verlaufs der aktuellen Fahrtroute, also der gespeicherten aktuellen Ortspositionen zu ermitteln, sieht eine Ausgestaltung der Erfindung vor, daß die gespeicherten aktuellen Ortspositionen mit in einem Standardfahrtroutenspeicher, in dem in der Vergangenheit befahrene Standardfahrtrouten abgelegt sind, verglichen werden. Wenn die gespeicherten aktuellen Ortspositionen mit einem insbesondere anfänglichen Streckenabschnitt einer der Fahrtrouten des Standardfahrtroutenspeichers übereinstimmt, wird die entsprechende Zielposition und Standardfahrtroute als aktuelle Fahrtroute abgeleitet (identifiziert). Um fehlerhafter Fahrhinweisanzeigen, die vom Fahrer wiederum als lästig empfunden werden könnten, möglichst gering zu halten, wird weiterhin vorgeschlagen, daß eine Übereinstimmung mit einer der Fahrtrouten oder Streckenabschnitte im Standardfahrtroutenspeicher nur dann als gegeben angenommen wird, wenn die Übereinstimmung mit einer vorgegebenen statistischen Sicherheit vorliegt. Für diese kann z.B. ein Wert von 95 % vorgegeben sein. Alternativ dazu ist es aber auch möglich, die ermittelte Zielposition vom Fahrer bestätigen zu lassen, insbesondere dann, wenn gebührenpflichtige Dienstleistungen in Anspruch genommen werden sollen.

Zur Aktualisierung des Bestandes an gespeicherten Standardfahrtrouten ist es vorgesehen, daß die gespeicherten aktuellen Ortspositionen jeweils nach Beendigung der Fahrt selbsttätig in einem Fahrtroutenzwischenspeicher für eine vorgegebene Zeitspanne abgelegt werden. Eine Fahrtroute wird aus dem Fahrtroutenzwischenspeicher in den Standardfahrtroutenspeicher übertragen, wenn die Häufigkeit, mit der die entsprechende Fahrtroute im Fahrtroutenzwischenspeicher vorhanden ist, größer als ein vorgegebener Wert ist. Um den Fahrtroutenzwischenspeicher nicht unnötig zu füllen, werden die im Fahrtroutenzwischenspeicher abgelegten Fahrtrouten nach Ablauf einer vorgegebenen Zeitspanne oder nach Übertragung in den Standardfahrtroutenspeicher gelöscht.

Außerdem wird vorgeschlagen, daß die Standardfahrtrouten zusammen mit Zeitinformationen, die vorzugsweise den Wochentag und die Tageszeit umfassen, abgespeichert werden. Dadurch können die Standardfahrtrouten insbesondere auch zur Ermittlung der Zielposition und damit der Fahrtroute anhand von Zeitinformationen verwendet werden.

Zweckmäßigerweise wird die Zielposition mittels auf einem Bordcomputer ablaufender Rechenprogramme abgeleitet.

Eine bevorzugte Zielführungsunterstützungsvorrichtung sieht eine Ortspositionsermittlungseinrichtung vor, mit der die aktuelle Ortsposition ermittelbar ist. Desweiteren weist die Zielführungsunterstützungsvorrichtung eine Fahrtroutenermittlungseinrichtung auf, die mit einer Zielpositionsableiteinrichtung zum Ableiten der Zielposition nach Wahrscheinlichkeitsgesichtspunkten anhand gespeicherter Fahrinformationen aus der Vergangenheit ausgestattet ist. Die Fahrtroutenermittlungseinrichtung ist mit einer ebenfalls vorgesehenen Kommunikationseinrichtung zum Einholen aktueller Fahrhinweise von einem außerhalb des Fahrzeugs angeordneten Verkehrsrechner verbunden. Angezeigt werden die Fahrhinweise dem Fahrzeugführer durch eine im Fahrzeug installierte Anzeigeeinrichtung. Durch diese Zielführungsunterstützungsvorrichtung wird sichergestellt, daß der Fahrzeugführer auch bei Routinefahrten, bei denen in der Regel keine Eingabe der Zielposition durch den Fahrzeugführer erfolgt, bei Auftreten von Staus usw. Fahrhinweise für diese Fahrtroute erhält.

Mit der Erfindung wird vorgeschlagen, daß die aktuelle Ortsposition durch die Ortspositionserermittlungseinnchtung fortlaufend ermittelbar ist und daß ein Arbeitsspeicher zur Speicherung der fortlaufend ermittelten aktuellen Ortspositionen vorgesehen ist. Die Zielposition ist durch die über gespeicherte Entscheidungskriterien verfügende Zielpositionsableiteinrichtung aus den bis dahin gespeicherten aktuellen Ortspositionen, also aus dem anfänglichen Verlauf der aktuellen Fahrtroute, ableitbar.

Eine alternative Ausgestaltung der Erfindung sieht vor, daß die Fahrinformationen Zeitinformationen umfassen, die mindestens den Zeitpunkt des Beginns der Fahrt beinhalten, und die Zielposition durch die Zielpositionsableiteinrichtung aus den Zeitinformationen ableitbar ist.

Um die in der Vergangenheit häufig zurückgelegten Fahrtrouten berücksichtigen zu können, weist die Zielpositionsableiteinrichtung einen Standardfahrtroutenspeicher, in dem Standardfahrtrouten in Form von aufeinanderfolgenden Ortspositionen abgelegt sind, und eine Vergleichseinrichtung zum Vergleich der gespeicherten aktuellen Ortspositionen mit im Standardfahrtroutenspeicher abgelegten Standardfahrtrouten zur Ableitung der Zielposition auf.

Zur Aktualisierung des Bestands der Standardfahrtrouten ist ein Fahrtroutenzwischenspeicher vorgesehen, in dem die gespeicherten aktuellen Ortspositionen jeweils nach Beendigung der Fahrt selbsttätig ablegbar sind. Eine zusätzlich vorgesehene Übertragungseinrichtung ermöglicht die Übertragung der Fahrtrouten aus dem Fahrtroutenzwischenspeicher in den Standardfahrtroutenspeicher, wenn die Häufigkeit, mit der die entsprechende Fahrtroute befahren wurde, größer als ein vorgegebener Wert ist. Die Häufigkeit bezieht sich auf eine vorgegebene Zeitspanne vorzugsweise in der unmittelbaren Vergangenheit.

Vorzugsweise ist zur Durchführung der relativ aufwendigen Erfassungs- und Vergleichsoperationen im Fahrzeug ein Bordcomputer vorgesehen, wobei die Zielpositionsableiteinrichtung ein im Arbeitsspeicher des Bordcomputers gespeichertes Rechenprogramm ist, das mindestens einen statistischen Rechenalgorithmus aufweist.

Die Kommunikationseinrichtung für den Datenaustausch mit dem externen Verkehrsrechner ist vorzugsweise als ein Mobilfunktelefon ausgestaltet.

Anhand des in der einzigen Figur der Zeichnung dargestellten Systems zur Zielführung eines Fahrzeugs mit einer Zielführungsunterstützungsvorrichtung im Fahrzeug und einem externen Verkehrsrechner wird die Erfindung nachfolgend beispielhaft beschrieben.

Das in der Figur schematisch dargestellte System zur Zielführung eines Fahrzeugs umfaßt eine externe und eine im Fahrzeug angeordnete Systemeinheit. Die Systemeinheit im Fahrzeug ist mit einer Kommunikationseinrichtung 1 ausgerüstet, mittels welcher die datentechnische Verbindung zur externen Systemeinheit herstellbar ist. Verbunden ist die Kommunikationseinrichtung 1 mit dem im Fahrzeug vorgesehenen Bordcomputer 2, durch den die Steuerung der fahrzeuginternen Geräteeinheiten erfolgt. So ist der Bordcomputer 2 mit einer Anzeigeeinrichtung 3 verbunden, die die Ausgabe von Fahrhinweisen für den Fahrzeugführer ermöglicht. Dabei kann die Ausgabe optisch und zusätzlich akustisch, insbesondere in Form einer Sprachausgabe, erfolgen. Ein im Fahrzeug installierter GPS-Empfänger 4 zum Empfang von Signalen für die Satellitennavigation (GPS = Global Positioning System) ist zur fortlaufenden Bestimmung der aktuellen Ortsposition des Fahrzeugs vorgesehen. Verbunden ist der GPS-Empfänger 4 über den Bordcomputer 2 mit einem Arbeitsspeicher 5, in dem die ermittelten Ortspositionsdaten zusammen mit entsprechenden Zeitinformationen, insbesondere dem Zeitpunkt des Beginns der Fahrt, ablegbar sind. Zum Ableiten der aktuellen Zielposition und Fahrtroute aus den im Speicher 5 als gespeicherte aktuelle Ortspositionen abgelegten Ortspositionsdaten ist eine ebenfalls mit dem Bordcomputer 2 verbundene Fahrtroutenermittlungseinrichtung 6 vorgesehen, zu der wiederum eine Zielpositionsableiteinrichtung 7 gehört Die Zielpositionsableiteinrichtung 7 umfaßt im Ausführungsbeispiel eine Fahrtroutenvergleichseinrichtung 8, die Zugriff auf die gespeicherten aktuellen Ortspositionen im Arbeitsspeicher 5 und die in einem Standardfahrtroutenspeicher 9 abgelegten typischen Fahrtrouten hat. Selbstverständlich kann der Standardfahrtroutenspeicher 9 auch außerhalb des Fahrzeugs angeordnet sein, insbesondere wenn die Standardfahrtrouten zu einer organisatorischen Einheit, z.B. einem Busunternehmen, gehören. Die Fahrtroutenvergleichseinrichtung 8 ermöglicht den Vergleich der aktuellen Fahrtroute mit den im Standardfahrtroutenspeicher 9 abgelegten Fahrtrouten und daraus abgeleitet die Vorhersage des tatsächlichen aktuellen Fahrtziels (Zielposition) des Fahrzeugs. Die Fahrtroutenermittlungseinrichtung 6 ist mit der Kommunikationseinrichtung 1 derart verbunden, daß über ein Steuersignal 10 das Einholen aktueller Fahrhinweise für die Fahrtroute zur aktuellen Zielposition durch die Kommunikationseinrichtung 1 auslösbar ist.

Die gespeicherten aktuellen Ortspositionen sind nach Beendigung der Fahrt in einem mit dem Bordcomputer 2 verbundenen Fahrtroutenzwischenspeicher 11 ablegbar. Der Fahrtroutenzwischenspeicher 11 ist über eine Übertragungseinrichtung 12 mit dem Standardfahrtroutenspeicher 9 verbunden. Die Übertragungseinrichtung 12 ermöglicht die Übertragung von Fahrtrouten aus dem Fahrtroutenzwischenspeicher 11 in den Standardfahrtroutenspeicher 9, wenn die Häufigkeit, mit der eine Fahrtroute in einer vorgegebenen Zeitspanne in der Vergangenheit befahren wurde, größer als ein vorgegebener oder durch den Fahrer vorgebbarer Wert ist. Die Übertragungseinrichtung 12 ermöglicht also einen Vergleich aller im Fahrtroutenzwischenspeicher 11 abgelegten Fahrtrouten untereinander und somit die Bestimmung der Häufigkeit, mit der eine Fahrtroute im Fahrtroutenzwischenspeicher 11 vorkommt. Die im Fahrtroutenzwischenspeicher 11 abgelegten Fahrtrouten sind vorzugsweise mit einer Zeitinformation versehen, die insbesondere Uhrzeit und Wochentag und den Monat des Beginns der entsprechenden Fahrtroute umfaßt. Durch einen entsprechenden Aktualisierungsalgorithmus ist der Fahrtroutenzwischenspeicher 11 aktualisierbar dabei bewirkt der Aktualisierungsalgorithmus die Löschung aller im Fahrtroutenzwischenspeicher 11 abgelegten Fahrtrouten, deren Zeitpunkt außerhalb einer vorgegebenen Zeitspanne liegt.

Bei der Zielführungsunterstützung des Fahrzeugführers werden nach dem Start des Fahrzeugs die aktuellen Ortspositionen mit Hilfe des GPS-Empfängers 4 und des Bordcomputers 2 fortlaufend ermittelt und im Speicher 5 als gespeicherte aktuelle Ortspositionen abgelegt. Aus der bis zu diesem Zeitpunkt vorliegenden aktuellen Fahrtroute wird durch die Fahrtroutenermittlungseinrichtung 6 die Zielposition und somit die vom Fahrer voraussichtlich gewünschte Fahrtroute abgeleitet. Dazu wird die Zielpositionsableiteinrichtung 7 veranlaßt, in kurzen zeitlichen Abständen mittels der Fahrtroutenvergleichseinrichtung 8 die gespeicherten aktuellen Ortspositionen mit den Fahrtrouten im Standardfahrtroutenspeicher 9 zu vergleichen. Eine der im Standardfahrtroutenspeicher 9 abgelegten Standardfahrtrouten wird als aktuelle Fahrtroute identifiziert, wenn diese mindestens einem Streckenabschnitt der im Standardfahrtroutenspeicher 9 abgelegten Fahrtrouten mit einer vorgegebenen statistischen Sicherheit entspricht. Um Fehlidentifizierungen zu vermeiden, ist für die vorgegebene statistische Sicherheit ein Wert von mindestens 95 % vorgesehen; alternativ dazu kann aber auch z.B. durch Knopfdruck oder dergleichen dem System mitgeteilt werden, daß es sich aktuell um eine Standardfahrtroute handelt, und auf diese Weise die Zahl der Fehlidentifiderungen weiter verringert werden. Ist eine aktuelle Fahrtroute mit der vorgegebenen statistischen Sicherheit ermittelt, wird von der Fahrtroutenermittlungseinrichtung 6 ein Steuersignal 10 ausgelöst und die Kommunikationseinrichtung 1 veranlaßt, für diese aktuelle Fahrtroute Verkehrsinformationen vom Verkehrsrechner einzuholen. Der Verkehrsrechner 22 überträgt nach einer entsprechenden Anforderung aktuelle Fahrhinweise und/oder eine aktuelle alternative Fahrtroute an das Fahrzeug.

Die Ermittlung der Standardfahrtrouten erfolgt dadurch, daß nach Beendigung der Fahrt die gespeicherten aktuellen Ortspositionen jeweils im Fahrtroutenzwischenspeicher 11 abgelegt werden. Die im Fahrtrouterwwischenspeicher 11 abgelegten Fahrtrouten werden durch die Übertragungseinrichtung 12 in den Standardfahrtroutenspeicher 9 übertragen, wenn eine Fahrtroute im Fahrtroutenzwischenspeicher 11 häufiger als eine vorgegebene Zahl vorhanden ist. Die im Fahrtroutenzwischenspeicher 11 vorliegenden Fahrtrouten werden nach der Übertragung in den Standardfahrtroutenspeicher 9 gelöscht. Eine Löschung erfolgt ebenfalls, wenn die Zeitinformation einer im Fahrtroutenzwischenspeicher 11 abgelegten Fahrtroute außerhalb einer vorgegebenen Zeitspanne liegt. Eine Löschung der Fahrtrouten erfolgt auch für die Fahrtrouten im Standardfahrtroutenspeicher 9, wenn deren Zeitinformation (für das letzte Befahren) außerhalb einer ebenfalls vorgegebenen Zeitspanne liegt, wobei diese Zeitspanne in der Regel größer als die Zeitspanne zur Löschung von Fahrtrouten im Fahrroutenzwischenspeicher 11 ist.

Selbstverständlich ist auch eine halbautomatische Ermittlung der Standardfahrtrouten denkbar. In diesem Fall teilt der Fahrzeugführer dem Bordcomputer z.B. durch Knopfdruck mit, daß die gespeicherten aktuellen Ortspositionen eine neue typische Fahrtroute betreffen; der Bordrechner speicnen dann die Fahrtroute am Ende der Fahrt direkt im Standardfahrtroutenspeicher 9 ab. Ein Fahrtroutenzwischenspeicher 11 ist bei dieser Ausgestaltung der Erfindung nicht erforderlich.

Alternativ zu der oben beschriebenen Ausführungsform kann die Zielpositionsableiteinrichtung 7 als ein statistischer Rechenalgorithmus ausgebildet sein, durch den unter Berücksichtigung zufälliger Abweichungen aus den Daten der aktuellen Ortspositionsdaten die aktuelle Fahrtroute rechentechnisch ableitbar ist.

Es ist selbstverständlich möglich, die gerätetechnischen Ausgestaltungen der Zielpositionsableiteinrichtung 7, der Fahrtroutenvergleichseinrichtung 8, des Standardfahrtroutenspeichers 9, des Fahrtroutenzwischenspeichers 11 und der Übertragungseinrichtung 12 mindestens teilweise durch entsprechende Rechenalgorithmen, die zweckmäßigerweise vom Bordcomputer 2 abgearbeitet werden, zu ersetzen. Auch das Steuersignal 10 kann zweckmäßigerweise durch ein entsprechendes Rechenprogramm im Zusammenwirken mit einer entsprechenden gerätetechnischen Einheit erzeugt werden.

Die hier im wesentlichen anhand der gespeicherten aktuellen Ortspositionen beschriebene Bestimmung der Zielposition und der Fahrtroute kann natürlich immer unter Berücksichtigung oder unter ausschließlicher Heranziehung der aktuellen Zeitinformationen erfolgen. Insbesondere bei Routinefahrten, die immer zum gleichen Zeitpunkt stattfinden, kann anhand der Zeitinformationen mit hoher Sicherheit auf die aktuelle Zielposition und Fahrtroute geschlossen werden.

### BEZUGSZEICHENLISTE:

- 1: Kommunikationseinrichtung
- 2: Bordcomputer
- 3: Anzeigeeinrichtung
- 4: GPS-Empfänger
- 5: Arbeitsspeicher
- 6: Fahrtroutenermittlungseinrichtung
- 7: Zielpositionsableiteinrichtung
- 8: Fahrtroutenvergleichseinrichtung
- 9: Standardfahrtroutenspeicher
- 10: Steuersignal
- 11: Fahrtroutenzwischenspeicher
- 12: Übertragungseinnchtung

- 21: Sender/Empfänger
- 22: Verkehrsrechner
- 23: digitale Straßenkarte

## Patentansprüche (Patentansprüche für folgende(n) Vertragsstaat(en): DE, ES, FR, GB, IT, SE)

1. Verfahren zur Zielführungsunterstützung eines Fahrzeugführers zur Erreichung einer Zielposition mit einem Fahrzeug, bei dem die aktuelle Ortsposition ermittelt, eine Fahrtroute bestimmt, für diese Fahrtroute auf Anforderung aktuelle Fahrhinweise von einem außerhalb des Fahrzeugs angeordneten Verkehrsrechner eingeholt und dem Fahrer angezeigt werden, und
die Zielposition selbsttätig nach Wahrscheinlichkeitsgesichtspunkten anhand eines Vergleichs gespeicherter Fahrinformationen aus der Vergangenheit mit aktuellen Fahrinformationen abgeleitet wird.

2. Verfahren nach Anspruch 1, bei dem
die aktuellen Ortspositionen des Fahrzeugs fortlaufend ermittelt und in einem Arbeitsspeicher gespeichert werden und daß die Zielposition anhand der in der ersten Phase der Fahrt gespeicherten aktuellen Ortspositionen abgeleitet wird.

3. Verfahren nach Anspruch 1 oder 2, bei dem
die Zielposition anhand von Zeitinformationen, die den Zeitpunkt des Beginns der Fahrt umfassen, abgeleitet wird.

4. Verfahren nach Anspruch 2, bei dem
die Zielposition durch Vergleich der gespeicherten aktuellen Ortspositionen mit in einem Standardfahrtroutenspeicher abgelegten Standardfahrtrouten abgeleitet wird.

5. Verfahren nach Anspruch 4, bei dem
die Entscheidung, ob die gespeicherten aktuellen Ortspositionen mit einer der Fahrtrouten im Standardfahrtroutenspeicher übereinstimmen, mit einer vorgebbaren statistischen Sicherheit getroffen wird.

6. Verfahren nach Anspruch 4, bei dem
die gespeicherten aktuellen Ortspositionen zur Ermittlung der Standardfahrtrouten jeweils nach Beendigung der Fahrt selbsttätig in einem Fahrtroutenzwischenspeicher für eine vorgegebene Zeitspanne abgelegt werden.

7. Verfahren nach Anspruch 6, bei dem
eine Fahrtroute aus dem Fahrtroutenzwischenspeicher in den Standardfahrtroutenspeicher übertragen wird, wenn die Häufigkeit, mit der die entsprechende Fahrtroute im Fahrtroutenzwischenspeicher vorhanden ist, größer als ein vorgegebener Wert ist.

8. Verfahren nach Anspruch 6 und 7, bei dem
die im Fahrtroutenzwischenspeicher abgelegten Fahrtrouten nach Ablauf der vorgegebenen Zeitspanne oder nach Übertragung in den Standardfahrtroutenspeicher gelöscht werden.

9. Verfahren nach Anspruch 7, bei dem
die Standardfahrtrouten zusammen mit Zeitinformationen abgespeichert werden.

10. Verfahren nach Anspruch 9, bei dem
die Zeitinformationen den Wochentag und die Tageszeit umfassen.

11. Verfahren nach Anspruch 1 oder 2, bei dem
die Zielposition mittels Rechenprogrammen abgeleitet wird.

12. Zielführungsunterstützungsvorrichtung zur Durchführung des Verfahrens nach Anspruch 1, mit einer Ortspositionserermittlungseinrichtung zur Erfassung der aktuellen Ortsposition, einer Fahrtroutenermittlungseinrichtung (6), einer Kommunikationseinrichtung (1) zum Datenaustausch mit einem außerhalb des Fahrzeugs angeordneten Verkehrsrechner (22) und einer Anzeigeeinrichtung (3) zur Anzeige von Fahrhinweisen für den Fahrzeugführer, wobei die Fahrhinweise auf Anforderung durch die Fahrroutenermittlungseinrichtung (6) eingeholt werden,
und wobei
die Fahrtroutenermittlungseinrichtung (6) eine Zielpositionsableiteinrichtung (7) zum selbsttätigen Ableiten der Zielposition nach Wahrscheinlichkeitsgesichtspunkten anhand gespeicherter Fahrinformationen aus der Vergangenheit aufweist.

13. Zielführungsunterstützungsvorrichtung nach Anspruch 12, in der
die aktuelle Ortsposition durch die Ortspositionserermittlungseinrichtung fortlaufend ermittelbar ist, ein Arbeitsspeicher (5) zur Speicherung der fortlaufend ermittelten aktuellen Ortspositionen vorgesehen ist und die Zielpositionsableiteinrichtung (7) Kriterien gespeichert hat, anhand derer die Zielposition aus den gespeicherten aktuellen Ortspositionen ableitbar ist.

14. Zielführungsunterstützungsvorrichtung nach Anspruch 12, in der
die Fahrinformationen Zeitinformationen umfassen, die mindestens den Zeitpunkt des Beginns der Fahrt beinhalten.

15. Zielführungsunterstützungsvorrichtung nach Anspruch 14, in der
die Zielposition durch die Zielpositionsableiteinrichtung (7) unter Nutzung der Zeitinformationen ableitbar ist.

16. Zielführungsunterstützungsvorrichtung nach Anspruch 13, in der
die Zielpositionsableiteinrichtung (7) einen Standardfahrtroutenspeicher (9), in dem in der Vergangenheit vom Fahrzeug zurückgelegte Fahrtrouten in Form von aufeinanderfolgenden Ortspositionen abgelegt sind, und eine Vergleichseinrichtung zum Vergleich der gespeicherten aktuellen Ortspositionen mit im Standardfahrtroutenspeicher (9) abgelegten Fahrtrouten zur Ableitung der Zielposition aufweist.

17. Zielführungsunterstützungsvorrichtung nach Anspruch 16, in der
zur Erzeugung der Standardfahrtrouten ein Fahrtroutenzwischenspeicher (11) zur Ablage der gespeicherten aktuellen Ortspositionen jeweils nach Beendigung der Fahrt vorgesehen ist.

18. Zielführungsunterstützungsvorrichtung nach Anspruch 17, in der
eine Übertragungseinrichtung (12) vorgesehen ist, zur Übertragung von Fahrtrouten aus dem Fahrtroutenzwischenspeicher (11) in den Standardfahrtroutenspeicher (9), wenn die Häufigkeit, mit der die entsprechende Fahrtroute in der Vergangenheit bereits befahren wurde, größer als ein vorgegebener Wert ist.

19. Zielführungsunterstützungsvorrichtung nach Anspruch 12, in der
im Fahrzeug ein Bordcomputer (2) als Bestandteil der Ortspositionsermittlungseinrichtung vorgesehen ist.

20. Zielführungsunterstützungsvorrichtung nach Anspruch 19, in der
die Zielpositionsableiteinrichtung (7) ein in einem Arbeitsspeicher des Bordcomputers (2) vorgesehenes Rechenprogramm ist.

21. Zielführungsunterstützungsvorrichtung nach Anspruch 20, in der
die Zielpositionsableiteinrichtung (7) mindestens ein statistisches Rechenprogramm aufweist.

22. Zielführungsunterstützungsvorrichtung nach Anspruch 12, in der
die Kommunikationseinrichtung (1) ein Mobilfunktelefon ist.

## Patentansprüche (Patentansprüche für folgende(n) Vertragsstaat(en): AT, CH, LI, NL)

1. Verfahren zur Zielführungsunterstützung eines Fahrzeugführers zur Erreichung einer Zielposition mit einem Fahrzeug, bei dem die aktuelle Ortsposition ermittelt, eine Fahrtroute bestimmt und für diese Fahrtroute aktuelle Fahrhinweise von einem außerhalb des Fahrzeugs angeoraneten Verkehrsrechner eingeholt und dem Fahrer angezeigt werden.
**dadurch gekennzeichnet,**
daß die Zielposition selbsttätig nacn Wahrscheinlichkeitsgesichtspunkten anhand eines Vergleichs gespeicherter Fahnnformationen aus der Vergangenheit mit aktuellen Fahrinformationen abgeleitet wird.

2. Verfahren nach Anspruch 1,
**dadurch gekennzeichnet,**
daß die aktuellen Ortspositionen des Fahrzeugs fortlaufend ermittelt und in einem Arbeitsspeicher gespeichert werden und daß die Zielposition anhand der in der ersten Phase der Fahrt gesDeicherten aktuellen Ortspositionen abgeleitet wird.

3. Verfahren nach Anspruch 1 oder 2,
**dadurch gekennzeichnet,**
daß die Zielposition anhand von Zeitinformationen, die den Zeitpunkt des Beginns der Fahrt umfassen, abgeleitet wird.

4. Verfahren nach Anspruch 2,
**dadurch gekennzeichnet,**
daß die Zielposition durch Vergleich der gespeicherten aktuellen Ortspositionen mit in einem Standardfahrtroutenspeicher abgelegten Standardfahrtrouten abgeleitet wird.

5. Verfahren nach Anspruch 4,
**dadurch gekennzeichnet,**
daß die Entscheidung, ob die gespeicherten aktuellen Ortspositionen mit einer der Fahrtrouten im Standardfahrtroutenspeicher übereinstimmen, mit einer vorgebbaren statistischen Sicherheit getroffen wird.

6. Verfahren nach Anspruch 4,
**dadurch gekennzeichnet,**
daß die gespeicherten aktuellen Ortspositionen zur Ermittlung der Standardfahrtrouten jeweils nach Beendigung der Fahrt selbsttätig in einem Fahrtroutenzwischenspeicher für eine vorgegebene Zeitspanne abgelegt werden.

7. Verfahren nach Anspruch 6,
**dadurch gekennzeichnet,**
daß eine Fahrtroute aus dem Fahrtroutenzwischenspeicher in den Standardfahrtroutenspeicher übertragen wird, wenn die Häufigkeit, mit der die entsprechende Fahrtroute im Fahrtroutenzwischenspeicher vorhanden ist, größer als ein vorgegebener Wert ist.

8. Verfahren nach Anspruch 6 und 7,
**dadurch gekennzeichnet,**
daß die im Fahrtroutenzwischenspeicher abgelegten Fahrtrouten nach Ablauf der vorgegebenen Zeitspanne oder nach Übertragung in den Standardfahrtroutenspeicher gelöscht werden.

9. Verfahren nach Anspruch 7,
**dadurch gekennzeichnet,**
daß die Standardfahrtrouten zusammen mit Zeitinformationen abgespeichert werden.

10. Verfahren nach Anspruch 9,
**dadurch gekennzeichnet,**
daß die Zeitinformationen den Wochentag und die Tageszeit umfassen.

11. Verfahren nach Anspruch 1 oder 2,
**dadurch gekennzeichnet,**
daß die Zielposition mittels Rechenprogrammen abgeleitet wird.

12. Zielführungsunterstützungsvorrichtung zur Durchführung des Verfahrens nach Anspruch 1, mit einer Ortspositionserermittlungseinrichtung zur Erfassung der aktuellen Ortsposition, einer Fahrtroutenermittlungseinrichtung (6), einer Kommunikationseinrichtung (1) zum Datenaustausch mit einem außerhalb des Fahrzeugs angeordneten Verkehrsrechner (22) und einer Anzeigeeinrichtung (3) zur Anzeige von Fahrhinweisen für den Fahrzeugführer,
**dadurch gekennzeichnet,**
daß die Fahrtroutenermittlungseinrichtung (6) eine Zielpositionsableiteinrichtung (7) zum selbsttätigen Ableiten der Ziel position nach Wahrscheinlichkeitsgesichtspunkten anhand gespeicherter Fahrinformationen aus der Vergangenheit aufweist.

13. Zielführungsunterstützungsvorrichtung nach Anspruch 12,
**dadurch gekennzeichnet,**
daß die aktuelle Ortsposition durch die Ortspositionserermittlungseinrichtung fortlaufend ermittelbar ist, daß ein Arbeitsspeicher (5) zur Speicherung der fortlaufend ermittelten aktuellen Ortspositionen vorgesehen ist und die Zielpositionsableiteinrichtung (7) Kriterien gespeichert hat, anhand derer die Zielposition aus den gespeicherten aktuellen Ortspositionen ableitbar ist.

14. Zielführungsunterstützungsvorrichtung nach Anspruch 12,
**dadurch gekennzeichnet,**
daß die Fahrinformationen Zeitinformationen umfassen, die mindestens den Zeitpunkt des Beginns der Fahrt beinhalten.

15. Zielführungsunterstützungsvorrichtung nach Anspruch 14,
**dadurch gekennzeichnet,**
daß die Zielposition durch die Zielpositionsableiteinrichtung (7) unter Nutzung der Zeitinformationen ableitbar ist.

16. Zielführungsunterstützungsvorrichtung nach Anspruch 13,
**dadurch gekennzeichnet,**
daß die Zielpositionsableiteinrichtung (7) einen Standardfahrtroutenspeicher (9), in dem in der Vergangenheit vom Fahrzeug zurückgelegte Fahrtrouten in Form von aufeinanderfolgenden Ortspositionen abgelegt sind, und eine Vergleichseinrichtung zum Vergleich der gespeicherten aktuellen Ortspositionen mit im Standardfahrtroutenspeicher (9) abgelegten Fahrtrouten zur Ableitung der Ziel position aufweist

17. Zielführungsunterstützungsvorrichtung nach Anspruch 16,
**dadurch gekennzeichnet,**
daß zur Erzeugung der Standardfahrtrouten ein Fahrtroutenzwischenspeicher (11) zur Ablage der gespeicherten aktuellen Ortspositionen jeweils nach Beendigung der Fahrt vorgesehen ist.

18. Zielführungsunterstützungsvorrichtung nach Anspruch 17,
**dadurch gekennzeichnet,**
daß eine Übertragungseinrichtung (12) vorgesehen ist. zur Übertragung von Fahrtrouten aus dem Fahrtroutenzwischenspeicher (11) in den Standardfahrtroutenspeicher (9), wenn die Häufigkeit, mit der die entsprechende Fahrtroute in der Vergangenheit bereits befahren wurde, größer als ein vorgegebener Wert ist.

19. Zielführungsunterstützungsvorrichtung nach Anspruch 12,
**dadurch gekennzeichnet,**
daß im Fahrzeug ein Bordcomputer (2) als Bestandteil der Ortspositionsermittlungseinrichtung vorgesehen ist.

20. Zielführungsunterstützungsvorrichtung nach Anspruch 19,
**dadurch gekennzeichnet,**
daß die Zielpositionsableiteinrichtung (7) ein in einem Arbeitsspeicher des Bordcomputers (2) vorgesehenes Rechenprogramm ist.

21. Zielführungsunterstützungsvorrichtung nach Anspruch 20,
**dadurch gekennzeichnet,**
daß die Zielpositionsableiteinrichtung (7) mindestens ein statistisches Rechenprogramm aufweist.

22. Zielführungsunterstützungsvorrichtung nach Anspruch 12,
**dadurch gekennzeichnet,**
daß die Kommunikationseinrichtung (1) ein Mobilfunktelefon ist.

## Claims (Claims for the following Contracting State(s): DE, ES, FR, GB, IT, SE)

1. A method of providing navigational support to a vehicle driver in reaching a destination in a vehicle, wherein the current location is detected, a route is determined for the journey, current travel information relating to this route is fetched on request from a traffic computer located outside the vehicle and indicated to the driver, and the destination is automatically derived, using probabilistic methods, by means of a comparison of stored past travel information with current travel information.

2. A method according to claim 1, wherein the current locations of the vehicle are detected continuously and stored in a working memory and wherein the destination is derived by means of the current locations stored during the first stage of the journey.

3. A method according to claim 1 or claim 2, wherein the destination is derived by means of time information, which includes the starting time of the journey.

4. A method according to claim 2, wherein the destination is derived by comparing the stored current locations with standard routes filed in a standard route memory.

5. A method according to claim 4, wherein the decision as to whether the stored current locations correspond with one of the routes in the standard route memory is taken with a given level of statistical reliability.

6. A method according to claim 4, wherein, after completion of each journey, the stored current locations are automatically filed in an intermediate route memory for a given time period for the purpose of determining standard routes.

7. A method according to claim 6, wherein a route is transmitted from the intermediate route memory to the standard route memory when the frequency with which the corresponding route appears in the intermediate route memory exceeds a given value.

8. A method according to claim 6 and claim 7, wherein the routes filed in the intermediate route memory are deleted after expiry of a given period or after transmission to the standard route memory.

9. A method according to claim 7, wherein the standard routes are stored together with time information.

10. A method according to claim 9, wherein the time information comprises the day of the week and the time of day.

11. A method according to claim 1 or claim 2, wherein the destination is derived by means of computer programs.

12. A navigational support device for carrying out the method according to claim 1, comprising a location detecting device for identifying the current location, a route determining device (6), a communication device (1) for data exchange with a traffic computer (22) located outside the vehicle and a display device (3) for indicating travel details to the vehicle driver, wherein the travel details are fetched on request by the route determining device (6), and wherein the route determining device (6) comprises a destination deriving device (7) for automatically deriving the destination, using probabilistic methods, on the basis of stored past travel information.

13. A navigational support device according to claim 12, in which the current location may be detected continuously by the location detecting device, a working memory (5) is provided for storing the continuously detected current locations and the destination deriving device (7) has stored criteria, by means of which the destination may be derived from the stored current locations.

14. A navigational support device according to claim 12, in which the travel information comprises time information, which includes at least the starting time of the journey.

15. A navigational support device according to claim 14, in which the destination may be derived by the destination deriving device (7) using the time information.

16. A navigational support device according to claim 13, in which the destination deriving device (7) comprises a standard route memory (9), in which routes travelled by the vehicle in the past are filed in the form of successive locations, and a comparison device for comparing the stored current locations with routes filed in the standard route memory (9) for the purpose of deriving the destination.

17. A navigational support device according to claim 16, in which an intermediate route memory (11) is provided for the purpose of generating standard routes, in which intermediate route memory (11) the stored current locations are filed after completion of each journey.

18. A navigational support device according to claim 17, in which a transmission device (12) is provided for the transmission of routes from the intermediate route memory (11) to the standard route memory (9) when the frequency with which the corresponding route has already been travelled in the past exceeds a given value.

19. A navigational support device according to claim 12, in which an on-board computer (2) is provided in the vehicle as a component of the location detecting device.

20. A navigational support device according to claim 19, in which the destination deriving device (7) is a computer program provided in a working memory of the on-board computer (2).

21. A navigational support device according to claim 20, in which the destination deriving device (7) comprises at least one statistical computer program.

22. A navigational support device according to claim 12, in which the communication device (1) is a mobile radio telephone.

## Claims (Claims for the following Contracting State(s): AT, CH, LI, NL)

1. A method of providing navigational support to a vehicle driver in reaching a destination in a vehicle, in which the current location is detected, a route is determined for the journey and current travel information relating to this route is fetched from a traffic computer located outside the vehicle and indicated to the driver,
characterised in that
the destination is automatically derived, using probabilistic methods, by means of a comparison of stored past travel information with current travel information.

2. A method according to claim 1,
characterised in that
the current locations of the vehicle are detected continuously and stored in a working memory and in that the destination is derived by means of the current locations stored during the first stage of the journey.

3. A method according to claim 1 or claim 2,
characterised in that
the destination is derived by means of time information, which includes the starting time of the journey.

4. A method according to claim 2,
characterised in that
the destination is derived by comparing the stored current locations with standard routes filed in a standard route memory.

5. A method according to claim 4,
characterised in that
the decision as to whether the stored current locations correspond with one of the routes in the standard route memory is taken with a given level of statistical reliability.

6. A method according to claim 4,
characterised in that,
after completion of each journey, the stored current locations are automatically filed in an intermediate route memory for a given time period for the purpose of determining standard routes.

7. A method according to claim 6,
characterised in that
a route is transmitted from the intermediate route memory to the standard route memory when the frequency with which the corresponding route appears in the intermediate route memory exceeds a given value.

8. A method according to claim 6 and claim 7,
characterised in that
the routes filed in the intermediate route memory are deleted after expiry of a given period or after transmission to the standard route memory.

9. A method according to claim 7,
characterised in that
the standard routes are stored together with time information.

10. A method according to claim 9,
characterised in that
the time information comprises the day of the week and the time of day.

11. A method according to claim 1 or claim 2,
characterised in that
the destination is derived by means of computer programs.

12. A navigational support device for carrying out the method according to claim 1, comprising a location detecting device for identifying the current location, a route determining device (6), a communication device (1) for data exchange with a traffic computer (22) located outside the vehicle and a display device (3) for indicating travel details to the vehicle driver,
characterised in that
the route determining device (6) comprises a destination deriving device (7) for automatically deriving the destination, using probabilistic methods, on the basis of stored past travel information.

13. A navigational support device according to claim 12,
characterised in that
the current location may be detected continuously by the location detecting device, in that a working memory (5) is provided for storing the continuously detected current locations and the destination deriving device (7) has stored criteria, by means of which the destination may be derived from the stored current locations.

14. A navigational support device according to claim 12,
characterised in that
the travel information comprises time information, which includes at least the starting time of the journey.

15. A navigational support device according to claim 14,
characterised in that
the destination may be derived by the destination deriving device (7) using the time information.

16. A navigational support device according to claim 13,
characterised in that
the destination deriving device (7) comprises a standard route memory (9), in which routes travelled by the vehicle in the past are filed in the form of successive locations, and a comparison device for comparing the stored current locations with routes filed in the standard route memory (9) for the purpose of deriving the destination.

17. A navigational support device according to claim 16,
characterised in that
an intermediate route memory (11) is provided for the purpose of generating standard routes, in which intermediate route memory (11) the stored current locations are filed after completion of each journey.

18. A navigational support device according to claim 17,
characterised in that
a transmission device (12) is provided for the transmission of routes from the intermediate route memory (11) to the standard route memory (9) when the frequency with which the corresponding route has already been travelled in the past exceeds a given value.

19. A navigational support device according to claim 12,
characterised in that
an on-board computer (2) is provided in the vehicle as a component of the location detecting device.

20. A navigational support device according to claim 19,
characterised in that
the destination deriving device (7) is a computer program provided in a working memory of the on-board computer (2).

21. A navigational support device according to claim 20,
characterised in that
the destination deriving device (7) comprises at least one statistical computer program.

22. A navigational support device according to claim 12,
characterised in that
the communication device (1) is a mobile radio telephone.

## Revendications (Revendications pour l'(les) Etat(s) contractant(s) suivant(s): DE, ES, FR, GB, IT, SE)

1. Procédé pour assister le guidage vers un but d'un conducteur de véhicule pour atteindre une position visée avec un véhicule, dans lequel la position locale actuelle est détectée, un itinéraire est déterminé, des indications de parcours actuelles sont saisies pour cet itinéraire, sur requête, par un calculateur de circulation agencé à l'extérieur du véhicule et sont affichées au conducteur, et la position visée est automatiquement dérivée suivant des points de vue de probabilité en fonction d'une comparaison d'informations de parcours mémorisées du passé avec des informations de parcours actuelles.

2. Procédé selon la revendication 1, dans lequel les positions locales actuelles du véhicule sont détectées de façon continue et mémorisées dans une mémoire de travail, et la position visée est dérivée en fonction des positions locales actuelles mémorisées dans la première phase du parcours.

3. Procédé selon la revendication 1 ou 2, dans lequel la position visée est dérivée en fonction d'informations temporelles, qui comportent l'instant du début du parcours.

4. Procédé selon la revendication 2, dans lequel la position visée est dérivée par comparaison des positions locales actuelles mémorisées avec des itinéraires standards stockés dans une mémoire d'itinéraires standards.

5. Procédé selon la revendication 4, dans lequel la décision si les positions actuelles mémorisées correspondent à l'un des itinéraires dans la mémoire d'itinéraires standards, est prise avec une sécurité statistique pouvant être prédéfinie.

6. Procédé selon la revendication 4, dans lequel les positions locales actuelles mémorisées pour déterminer les itinéraires standards sont stockées, à chaque fois après la fin du parcours, automatiquement dans une mémoire temporaire d'itinéraires pour un intervalle de temps prédéfini.

7. Procédé selon la revendication 6, dans lequel un itinéraire est transmis de la mémoire temporaire d'itinéraires dans la mémoire d'itinéraires standards quand la fréquence avec laquelle l'itinéraire correspondant est présent dans la mémoire temporaire d'itinéraires, est supérieure à une valeur prédéfinie.

8. Procédé selon les revendications 6 et 7, dans lequel les itinéraires stockés dans la mémoire temporaire d'itinéraires sont effacés après l'écoulement de l'intervalle de temps prédéfini ou après transfert dans la mémoire d'itinéraires standards.

9. Procédé selon la revendication 7, dans lequel les itinéraires standards sont mémorisés en même temps que des informations temporelles.

10. Procédé selon la revendication 9, dans lequel les informations temporelles comportent le jour de la semaine et l'heure du jour.

11. Procédé selon la revendication 1 ou 2, dans lequel la position visée est dérivée au moyen de programmes de calcul.

12. Dispositif pour assister le guidage vers un but, pour la mise en oeuvre du procédé selon la revendication 1, comportant un dispositif de détection de position locale pour déterminer la position locale actuelle, un dispositif de détection d'itinéraire (6), un dispositif de communication (1) pour l'échange de données avec un calculateur de circulation (22) agencé à l'extérieur du véhicule et un dispositif d'affichage (3) pour l'affichage d'indications de parcours pour le conducteur du véhicule, les indications de parcours étant saisies, sur requête, par le dispositif (6) de détection d'itinéraire, et le dispositif (6) de détection d'itinéraire présentant un dispositif (7) pour dériver le position visée, pour dériver automatiquement la position visée, suivant des points de vue de probabilité, en fonction d'informations de parcours mémorisées du passé.

13. Dispositif pour assister le guidage vers un but selon la revendication 12, dans lequel la position locale actuelle peut être détectée de façon continue par le dispositif de détection de position locale, une mémoire de travail (5) est prévue pour mémoriser les positions locales actuelles détectées de façon continue, et le dispositif (7) pour dériver la position visée présente, en mémoire, des critères en fonction desquels la position visée peut être dérivée des positions locales actuelles mémorisées.

14. Dispositif pour assister le guidage vers un but selon la revendication 12, dans lequel les informations de parcours comportent des informations temporelles qui contiennent au moins l'instant du début du parcours.

15. Dispositif pour assister le guidage vers un but selon la revendication 14, dans lequel la position visée peut être dérivée par le dispositif (7) pour dériver la position visée en utilisant des informations temporelles.

16. Dispositif pour assister le guidage vers un but selon la revendication 13, dans lequel le dispositif (7) pour dériver la position visée présente une mémoire d'itinéraires standards (9), dans laquelle sont stockés des itinéraires parcourus par le véhicule dans le passé sous forme de positions locales successives, et un dispositif de comparaison pour comparer les positions locales actuelles mémorisées avec des itinéraires stockés dans la mémoire (9) d'itinéraires standards pour dériver la position visée.

17. Dispositif pour assister le guidage vers un but selon la revendication 16, dans lequel, pour engendrer les itinéraires standards, il est prévu une mémoire temporaire d'itinéraires (11) pour stocker les positions locales actuelles mémorisées, à chaque fois après la fin du parcours.

18. Dispositif pour assister le guidage vers un but selon la revendication 17, dans lequel un dispositif de transfert (12) est prévu, pour transférer des itinéraires de la mémoire temporaire d'itinéraires (11) dans la mémoire (9) d'itinéraires standards lorsque la fréquence avec laquelle l'itinéraire correspondant a déjà été parcouru dans le passé, est supérieure à une valeur prédéfinie.

19. Dispositif pour assister le guidage vers un but selon la revendication 12, dans lequel un ordinateur de bord (2) est prévu dans le véhicule comme partie constitutive du dispositif de détection de position locale.

20. Dispositif pour assister le guidage vers un but selon la revendication 19, dans lequel le dispositif (7) pour dériver la position visée est un programme de calcul prévu dans une mémoire de travail de l'ordinateur de bord (2).

21. Dispositif pour assister le guidage vers un but selon la revendication 20, dans lequel le dispositif (7) pour dériver la position visée présente au moins un programme de calcul statistique.

22. Dispositif pour assister le guidage vers un but selon la revendication 12, dans lequel le dispositif de communication (1) est un radiotéléphone mobile.

## Revendications (Revendications pour l'(les) Etat(s) contractant(s) suivant(s): AT, CH, LI, NL)

1. Procédé pour assister le guidage vers un but d'un conducteur de véhicule pour atteindre une position visée avec un véhicule, dans lequel la position locale actuelle est détectée, un itinéraire est déterminé, et des indications de parcours actuelles sont saisies pour cet itinéraire par un calculateur de circulation agencé à l'extérieur du véhicule et sont affichées au conducteur,
caractérisé en ce que la position visée est automatiquement dérivée suivant des points de vue de probabilité en fonction d'une comparaison d'informations de parcours mémorisées du passé avec des informations de parcours actuelles.

2. Procédé selon la revendication 1,
caractérisé en ce que les positions locales actuelles du véhicule sont détectées de façon continue et mémorisées dans une mémoire de travail, et en ce que la position visée est dérivée en fonction des positions locales actuelles mémorisées dans la première phase du parcours.

3. Procédé selon la revendication 1 ou 2,
caractérisé en ce que la position visée est dérivée en fonction d'informations temporelles, qui comportent l'instant du début du parcours.

4. Procédé selon la revendication 2,
caractérisé en ce que la position visée est dérivée par comparaison des positions locales actuelles mémorisées avec des itinéraires standards stockés dans une mémoire d'itinéraires standards.

5. Procédé selon la revendication 4,
caractérisé en ce que la décision si les positions actuelles mémorisées correspondent à l'un des itinéraires dans la mémoire d'itinéraires standards, est prise avec une sécurité statistique pouvant être prédéfinie.

6. Procédé selon la revendication 4,
caractérisé en ce que les positions locales actuelles mémorisées pour déterminer les itinéraires standards sont stockées, à chaque fois après la fin du parcours, automatiquement dans une mémoire temporaire d'itinéraires pour un intervalle de temps prédéfini.

7. Procédé selon la revendication 6,
caractérisé en ce qu'un itinéraire est transmis de la mémoire temporaire d'itinéraires dans la mémoire d'itinéraires standards quand la fréquence avec laquelle l'itinéraire correspondant est présent dans la mémoire temporaire d'itinéraires, est supérieure à une valeur prédéfinie.

8. Procédé selon les revendications 6 et 7,
caractérisé en ce que les itinéraires stockés dans la mémoire temporaire d'itinéraires sont effacés après l'écoulement de l'intervalle de temps prédéfini ou après transfert dans la mémoire d'itinéraires standards.

9. Procédé selon la revendication 7,
caractérisé en ce que les itinéraires standards sont mémorisés en même temps que des informations temporelles.

10. Procédé selon la revendication 9,
caractérisé en ce que les informations temporelles comportent le jour de la semaine et l'heure du jour.

11. Procédé selon la revendication 1 ou 2,
caractérisé en ce que la position visée est dérivée au moyen de programmes de calcul.

12. Dispositif pour assister le guidage vers un but, pour la mise en oeuvre du procédé selon la revendication 1, comportant un dispositif de détection de position locale pour déterminer la position locale actuelle, un dispositif de détection d'itinéraire (6), un dispositif de communication (1) pour l'échange de données avec un calculateur de circulation (22) agencé à l'extérieur du véhicule et un dispositif d'affichage (3) pour l'affichage d'indications de parcours pour le conducteur du véhicule,
caractérisé en ce que le dispositif (6) de détection d'itinéraire présente un dispositif (7) pour dériver le position visée, pour dériver automatiquement la position visée, suivant des points de vue de probabilité, en fonction d'informations de parcours mémorisées du passé.

13. Dispositif pour assister le guidage vers un but selon la revendication 12,
caractérisé en ce que la position locale actuelle peut être détectée de façon continue par le dispositif de détection de position locale, en ce qu'une mémoire de travail (5) est prévue pour mémoriser les positions locales actuelles détectées de façon continue, et le dispositif (7) pour dériver la position visée présente, en mémoire, des critères en fonction desquels la position visée peut être dérivée des positions locales actuelles mémorisées.

14. Dispositif pour assister le guidage vers un but selon la revendication 1 2,
caractérisé en ce que les informations de parcours comportent des informations temporelles qui contiennent au moins l'instant du début du parcours.

15. Dispositif pour assister le guidage vers un but selon la revendication 14,
caractérisé en ce que la position visée peut être dérivée par le dispositif (7) pour dériver la position visée en utilisant des informations temporelles.

16. Dispositif pour assister le guidage vers un but selon la revendication 13,
caractérisé en ce que le dispositif (7) pour dériver la position visée présente une mémoire d'itinéraires standards (9), dans laquelle sont stockés des itinéraires parcourus par le véhicule dans le passé sous forme de positions locales successives, et un dispositif de comparaison pour comparer les positions locales actuelles mémorisées avec des itinéraires stockés dans la mémoire (9) d'itinéraires standards pour dériver la position visée.

17. Dispositif pour assister le guidage vers un but selon la revendication 16,
caractérisé en ce que, pour engendrer les itinéraires standards, il est prévu une mémoire temporaire d'itinéraires (11) pour stocker les positions locales actuelles mémorisées, à chaque fois après la fin du parcours.

18. Dispositif pour assister le guidage vers un but selon la revendication 1 7,
caractérisé en ce qu'un dispositif de transfert (12) est prévu, pour transférer des itinéraires de la mémoire temporaire d'itinéraires (11) dans la mémoire (9) d'itinéraires standards lorsque la fréquence avec laquelle l'itinéraire correspondant a déjà été parcouru dans le passé, est supérieure à une valeur prédéfinie.

19. Dispositif pour assister le guidage vers un but selon la revendication 12,
caractérisé en ce qu'un ordinateur de bord (2) est prévu dans le véhicule comme partie constitutive du dispositif de détection de position locale.

20. Dispositif pour assister le guidage vers un but selon la revendication 19,
caractérisé en ce que le dispositif (7) pour dériver la position visée est un programme de calcul prévu dans une mémoire de travail de l'ordinateur de bord (2).

21. Dispositif pour assister le guidage vers un but selon la revendication 20,
caractérisé en ce que le dispositif (7) pour dériver la position visée présente au moins un programme de calcul statistique.

22. Dispositif pour assister le guidage vers un but selon la revendication 12,
caractérisé en ce que le dispositif de communication (1) est un radiotéléphone mobile.
